# EUROPEAN PATENT APPLICATION

(11) **EP 4 779 160 A1**
(43) Date of publication of application: **22.07.2026**
(21) Application number: 25226692.9
(22) Date of filing: 23.12.2025
(51) Int. Cl.: F16B 5/02, F16B 5/06, F16B 19/10, F16B 33/00, F16B 37/04, F16B 21/08

(54) **FASTENER WITH COMPOSITE SLEEVE**

(30) Priority: 21.01.2025 US 202563747784 P
(71) Applicant: Centrix AeroSpace LLC, Kent, Washington 98032 (US)
(72) Inventor: Travis, McClure, Kent, 98032 (US)
(74) Representative: DTS Patent- und Rechtsanwälte PartmbB

(57) **Abstract**

A composite sleeve for a clamping fastener. The composite sleeve, in one example, includes a first section that is mated with a second section. In the composite sleeve, portions of the first section and the second section form an inner bore. Further, in the composite sleeve, one of the first section and the second section includes a protrusion that is positioned at a lower side and configured to prevent rotation of a collet body.

## Description

### CROSS-REFERENCE TO RELATED APPLICATION

The present application claims priority to U.S. Provisional Application No. 63/747,784, entitled "FASTENER WITH COMPOSITE SLEEVE", and filed on January 21, 2025. The entire contents of the above-listed application are hereby incorporated by reference for all purposes.

### FIELD

The present description relates generally to a fastener with a composite sleeve for a workpiece.

### BACKGROUND AND SUMMARY

Many manufacturing fields use fasteners for securing multiple workpieces to one another. Fasteners have been used in industries, such as the aerospace industry, to secure floor panels to underlying floor beams, attach wing components fuselage components, and pylons to themselves and one another, etc., to increase manufacturing adaptability. Certain previous fasteners have included one-piece sleeves that mate with workpieces and prevent rotation of a collet body. When expanded, the clamping components in the collet body act as a clamping arm to enable axial clamping of the workpiece stack. The sleeves function to protect the workpieces from degradation during fastener operation.

The inventor has recognized several drawbacks with single piece sleeves. For instance, due to the sleeve geometry, complex manufacturing methods may be needed to manufacture the sleeve. The inventor has therefore recognized a need to provide a fastener and specifically a fastener sleeve that demands less complexity with regard to manufacture. To elaborate, the inventor has specifically recognized a desire to streamline sleeve manufacturing through the use of injection molding combined with deep drawn stainless steel components and without the use of machining, in certain examples. Another goal of the sleeves discussed herein is to decrease the likelihood of corrosion (e.g., eliminate corrosion, in one use-case example). For example, some inserts are constructed out of aluminum that is susceptible to corrosion. Contrariwise, cress and injection molded plastics are impervious to corrosion. In attempts to resolve the corrosion issue with aluminum, coatings have been applied to the outer layer of the metal. However, these coatings increase the complexity of the manufacturing process and drive up the manufacturing costs. Specifically, the coatings may be costlier than machining the aluminum, in some cases. The use of cress and injection molded plastic does not demand the use of coatings. The inventor has further recognized loading issues with regard to certain plastic insert constructions. For instance, a pure plastic insert may degrade in small areas of high stress (e.g., in locations that make contact with a nut under load, for example). Generally speaking, in one use-case example, the plastic inserts described herein, may experience less loading in comparison to aluminum inserts. To elaborate, the metallic components in the insert, expanded upon below, are designed to absorb the areas of high stress (e.g., the cress which can carrier higher loads without degradation) and then spread the stress out over a much larger area and then transfer it into a much larger area of plastic such that plastic is able to be loaded with a decreased chance of degradation.

Facing the aforementioned challenges, the inventor developed a composite sleeve for a fastener to at least partially overcome the challenges. The sleeve includes, in one example, a composite sleeve with a first section that is mated with a second section. In the composite sleeve, portions of the first section and the second section form an inner bore. Additionally, in the composite sleeve, one of the first section and the second section includes a protrusion that is positioned at a lower side and configured to prevent rotation of a collet body. In this way, the composite sleeve is designed to be more efficiently manufactured.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 shows a cross-sectional view of a fastener assembly with a composite sleeve.
FIG. 2 shows another example of a two-piece composite sleeve for a fastener assembly.
FIG. 3 shows an example of a three-piece composite sleeve for a fastener assembly.
FIGS. 4-8B show detailed views of the composite sleeve in the fastener assembly depicted in FIG. 1.
FIGS. 9-13B show detailed views of the composite sleeve depicted in FIG. 2.
FIGS. 14-18B show detailed views of the composite sleeve depicted in FIG. 3.
FIGS. 19-23B show different views of an example of a composite sleeve for a fastener assembly.
FIGS. 24-33 show different views of another example of a fastener assembly with the composite sleeve depicted in FIG. 3.
FIG. 34 shows a detailed view of a stud and a collet body for use with the composite sleeve depicted in FIG. 1.

### DETAILED DESCRIPTION

A fastener assembly is described herein that includes a composite workpiece sleeve. The multi-piece sleeve specifically includes at least two sections that mate with one another to form an inner bore with at least one protrusion that prevents rotation of a collet body. The composite sleeve allows the sleeve to be more efficiently manufactured. An insert piece of the sleeve may be attached to a sleeve body via potting, adhesive bonding, an interference fit, welding, combinations thereof, and the like.

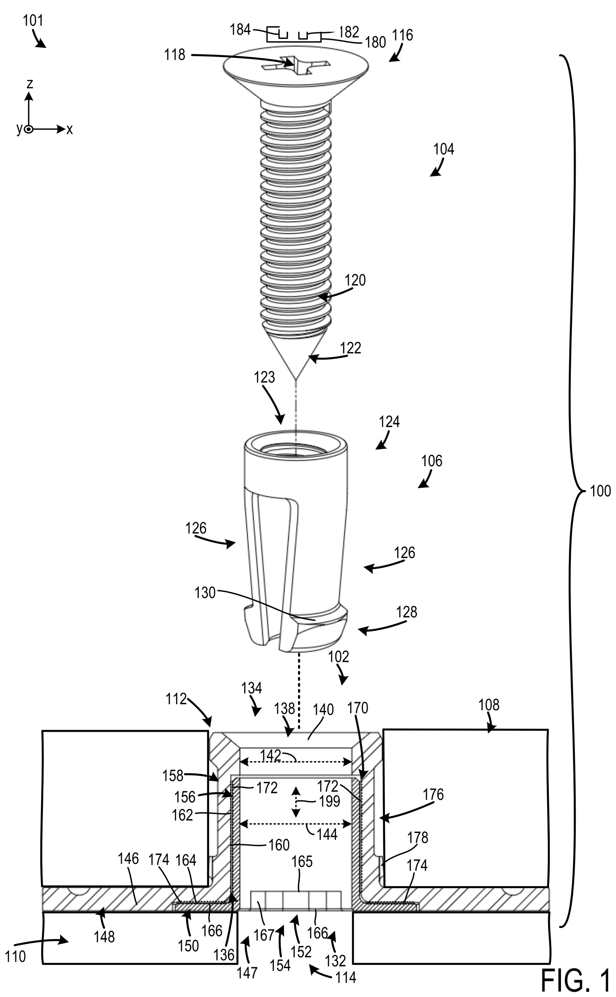

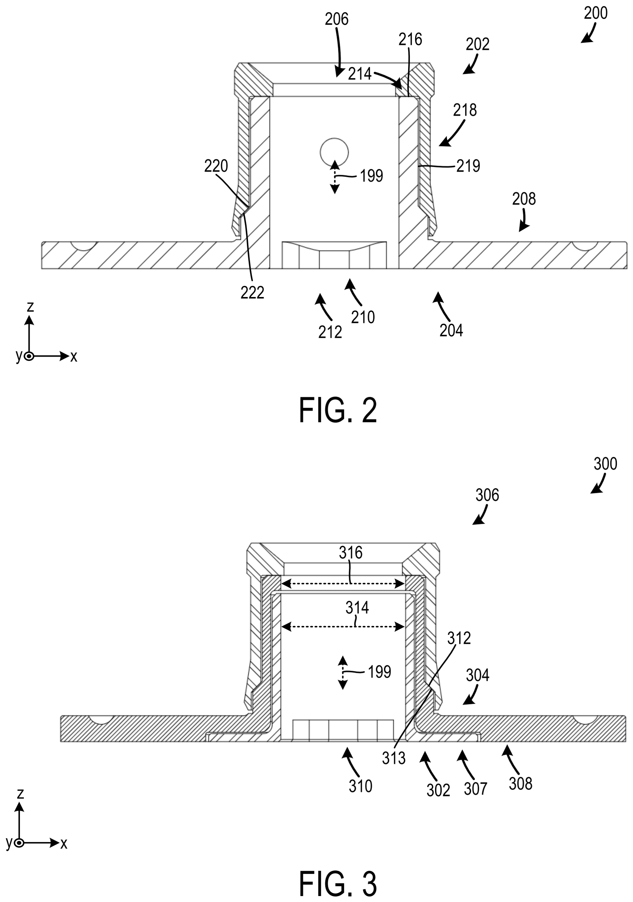

FIG. 1 shows a first example of a fastener system 101 with a fastener assembly 100 in an exploded view where a composite sleeve 102 is depicted in cross-section. The cutting plane for the cross-sectional view shown in FIG. 1 extends through a central axis 199 of the fastener assembly 100. The cutting planes for the cross-sectional views of the composite sleeves depicted in FIGS. 2-3, are orientated in a similar manner.

The fastener assembly 100 depicted in FIG. 1 additionally includes a stud 104 and a collet body 106. FIG. 1 further depicts workpieces 108 and 110 with openings 112 and 114, respectively. It will be understood that the stud 104 and the collet body 106 may be combined with the other composite sleeves described herein, as expanded upon below.

In the example illustrated in FIG. 1, the stud 104 includes a head 116 with a drive interface 118 that is configured to interact with a tooling apparatus 180 which induces rotation of the stud in opposing rotational directions to clamp and unclamp the fastener. More generally, the tooling apparatus 180 (e.g., one or more robotic tooling machine(s)) may be used to manipulate the fastener assembly 100 (e.g., rotate the stud 104, for instance). The tooling apparatus 180, illustrated in FIG. 1, may include a processor 182 and memory 184 (e.g., non-transitory memory) that stores instructions executable by the processor. The automated tooling apparatus 180 may further include tooling attachments, arms, carriages, and the like, for manipulating the fastener as well as performing other manufacturing operations. The other fasteners described herein may be manipulated using a similar tooling apparatus. The drive interface may be driven via bits, sockets, combinations thereof, and the like, for instance. Personnel may also perform at least a portion of the clamping and unclamping steps, in some cases.

The stud 104 includes a threaded section 120. In the illustrated example, the threaded section 120 extends to a distal tip 122 of the stud 104. To elaborate, the distal tip 122 has a conical shape, in the illustrated example. However, other configurations of the stud have been contemplated, such as a stud with an unthreaded section that is positioned below the threaded section and may extend to a distal end or tip of the stud. In such an example, the unthreaded section may have a smaller diameter than the threaded section. Still in other examples, the stud may include a smaller diameter threaded section that is positioned below a larger diameter threaded section. Even further in other examples, the distal tip of the stud may have a curved profile (e.g., domed profile), a planar profile, and the like. The threaded section 120 is profiled to threadingly engage a threaded section 123 of the collet body 106, in the illustrated example.

Additionally, in the illustrated example, the collet body 106 includes a crown 124 and multiple cantilever legs 126 that extend therefrom and each include a foot 128 with a clamping surface 130. Thus, the feet function as clamping feet when the fastener is transitioned into a clamping configuration.

Specifically, in the illustrated example, the composite sleeve 102 includes a first section 132 (e.g., an insert or other suitable component) that is mated with a second section 134 (e.g., a sleeve body or other suitable component). To elaborate, the second section 134 includes a recess 136 that allows the first section 132 to mate therewith.

In the illustrated example, the second section 134 includes an upper opening 138 with a chamfered surface 140. An inner diameter 142 of the upper opening 138 (below the chamfered surface) is illustrated for reference. An inner diameter 144 of the first section 132 is further illustrated. The inner diameters 142 and 144 are equivalent, in the illustrated example. The first section 132 is arranged below the upper opening 138 of the second section 134 in the illustrated example. However, other sleeve geometries are possible.

The second section 134 includes a flange 146 that is arranged at the lower side 147 of the sleeve 102. The first section 132 additionally includes a flange 150. The first section 132 includes protrusions 152 at a lower side 154. The protrusions 152 are profiled to prevent rotation of the collet body 106 when the collet body is mated with the composite sleeve 102. Specifically, the first section 132 includes two protrusions, in the illustrated example. However, in other examples the first section may include a single protrusion or more than two protrusions such as three protrusions, four protrusions, etc. The number of protrusions included in the sleeve may be equal to the number of feet in the collet body. However, in other examples, the sleeve may include fewer protrusions than the number of collet body legs. For instance, the collet body may include two legs and the sleeve may include a single anti-rotation protrusion, in an alternate embodiment.

The first section 132 includes a body 156 above the flange 150. Likewise, the second section 134 includes a body 158 above the flange 146. An inner surface 160 of the body 158 may be in face sharing contact with an outer surface 162 of the body 156. Further, an upper surface 164 of the flange 150 may be in face sharing contact with a lower surface 166 of the flange 146.

The protrusions 152 each include an upper surface 165, a lower surface 166, and side surfaces 167, in the illustrated example. However, the protrusions may have other suitable profiles, in other examples.

As elaborated upon herein, a bonding agent may be used to attach the first section 132 to the second section 134. Additionally or alternatively, the first section 132 may be welded to the second section 134. As such, the composite sleeve 102 as well as the other composite sleeves described herein may be formed by bonding the sleeve sections together, may be integrally fabricated (e.g., injection molding around the sleeves, for instance), or may be installed and deformed together to create the final shape of the sleeve. The composite sleeve may be formed of any combination of material to achieve a desired effect. In one use-case example, injection molded plastic may be used to construct the main sleeve while the sleeve insert may be formed out a metal or one or more suitable polymers.

Various techniques may be employed to couple the first section 132 of the composite sleeve to the second section 134 of the composite sleeve. To elaborate, an attachment interface 170 may be formed between the first section 132 and the second section 134. The attachment interface 170 may take a variety of forms depending on factors such as the end-use design target of the sleeve and fastener assembly (more generally), material construction of the composite sleeve, geometry of the composite sleeves, combinations thereof, and the like.

**In** the illustrated example, the attachment interface 170 includes an upper portion 172. The upper portion 172 may at least partially (or in some cases fully) circumferentially extend around the central axis 199. Further, the upper portion 172 is aligned with a z-axis in the illustrated example. However, a variety of attachment interface contours are possible. Further, in the illustrated example, the attachment interface 170 includes a lower portion 174 that is formed between the flanges 148 and 150. However, the lower portion may be omitted from the attachment interface, in certain embodiments. Still further in other examples, the attachment interface may form a continuous shape that includes the upper portion and the lower portion and extends therebetween.

The attachment interface 170 may take the form of an interference fit interface, in one example. **In** such an example, the sections of the composite sleeve may be sized such that the first section 132 is press-fit into the second section 134 or vice versa. Additionally or alternatively, the attachment interface 170 may take form of an adhesive interface. In such an example, a variety of suitable adhesives may be used such as epoxies, acrylics, resins, combinations thereof, and the like. Still further, the attachment interface 170 may take the form of a potting material (e.g., epoxy, urethane, silicon, acrylic, combinations thereof, and the like). Further, in certain embodiments, attachment interfaces which include both a friction fit and adhesive attachment have been contemplated.

The sections of the composite sleeve 102 as well as the other composite sleeves described herein may be formed via tooling or by installing the collet body and/or stud and then transitioning the fastener assembly to a clamping state so as to compress the components in the system. In such an example, the sleeve may have an anti-rotation tooling component or other suitable feature such as one or more indentations or sharp protrusions.

Further, a gap 176 is formed between the second section 134 and the workpiece 108 and an extension 178 that contacts the workpiece 108 is formed in the second section 134, in the illustrated example. However, a variety of composite sleeve contours have been contemplated. The attachment interface 170 and/or the other features of the composite sleeve 102 and the fastener assembly 100 depicted in FIG. 1 may be incorporated into the other composite sleeves and/or fastener assemblies described herein and vice versa. As such, fastener assembly and composite sleeve variants which combine selected features (e.g., structural and/or function features) from two of more of the fasteners and sleeves shown in FIGS. 1-34 have been contemplated.

An axis system is provided in FIG. 1 as well as FIGS. 2-34 for reference. The z-axis may be a vertical axis (e.g., parallel to a gravitational axis), the x-axis may be a lateral axis (e.g., horizontal axis), and/or the y-axis may be a longitudinal axis, in one example. However, the axes may have other orientations, in other examples. Further, the central axis 199 of the fastener assembly 100 depicted in FIG. 1 as well as the fasteners depicted in FIGS. 2-34 for reference. Further, above and below as discussed herein may refer to relative proximal and distal positions in the fastener. However, it will be appreciated that the fastener's central axis may or may not be aligned with a gravitational axis in different installation orientations.

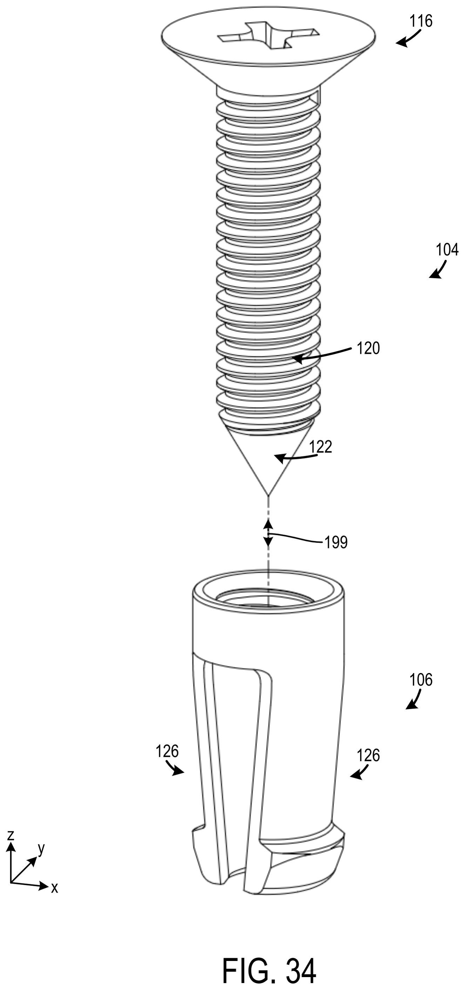

FIG. 34 shows a detailed view of the stud 104 and the collet body 106. The stud 104 includes the threaded section 120 that axially extend from the head 116 of the stud to the distal tip 122, in the illustrated example. However, the stud 104 may include an unthreaded section at a location between the head and the distal tip 122, in alternate examples. Further, the collet body 106 include two legs 126, in the illustrated example. However, collet bodies with a single leg or three or more legs have been envisioned.

FIG. 2 shows another example of a composite sleeve 200. The composite sleeve 200 is again divided into sections. To elaborate, a first section 202 circumferentially encloses at least a portion of a second section 204. The first section 202 includes an upper opening 206 and the second section 204 includes a flange 208 and protrusions 210 at a lower side 212. In the illustrated example, the first section 202 includes a lip 214 that sits on an upper surface 216 of the second section 204. A body 218 of the first section 202 extends down an outer circumference 219 of the second section 204 to the flange 208.

The second section 204 and the first section 202 include sloped surfaces 220 and 222 in the illustrated example. The sloped surfaces 220 and 222 allows the vertical position of the second section 204 to be delimited.

FIG. 3 shows another example of a composite sleeve 300. The composite sleeve 300 includes a first section 302, a second section 304, and a third section 306. The first section 302 is again mated with the second section 304. Additionally, the third section 306 at least partially circumferentially surrounds the second section 304 above a flange 308 of the second section 304. The first section 302 again includes a flange 307. The third section 306 may have a similar profile to the first section 202, shown in FIG. 2. Further, the first section 302 may have a similar profile to the first section 132, shown in FIG. 1. Therefore, redundant description of the overlapping features is omitted for concision.

The second section 304 is captured between the first section 302 and the third section 306. The first section 302 again includes protrusions 310 that prevent rotation of a collet body when the collet body is mated with the sleeve. The third section 306 and the second section 304 include sloped surfaces 312 and 313 in the illustrated example. The sloped surfaces 312 and 313 allows the vertical position of the third section 306 to be delimited. An inner diameter 314 of the first section 302 may be equal to the inner diameter 316 of the second section 304.

The sections of the composite sleeves described herein may be constructed out of one or more metals. For instance, the sleeve sections may be constructed out of aluminum. Further, the sections of the sleeves may be injection molded, in one example. However, in other examples, the sleeve sections may include an injection molded core with a deep drawn or machined outer section. **In** one specific example, the first and second sleeve sections may be constructed out of one or more injection molded plastics. The material used to construct the sections of the sleeve may be chosen based on the end-use design goals, expected end-use loading, stud and/or collet body material construction, expected end-use environmental conditions, combinations thereof, and the like.

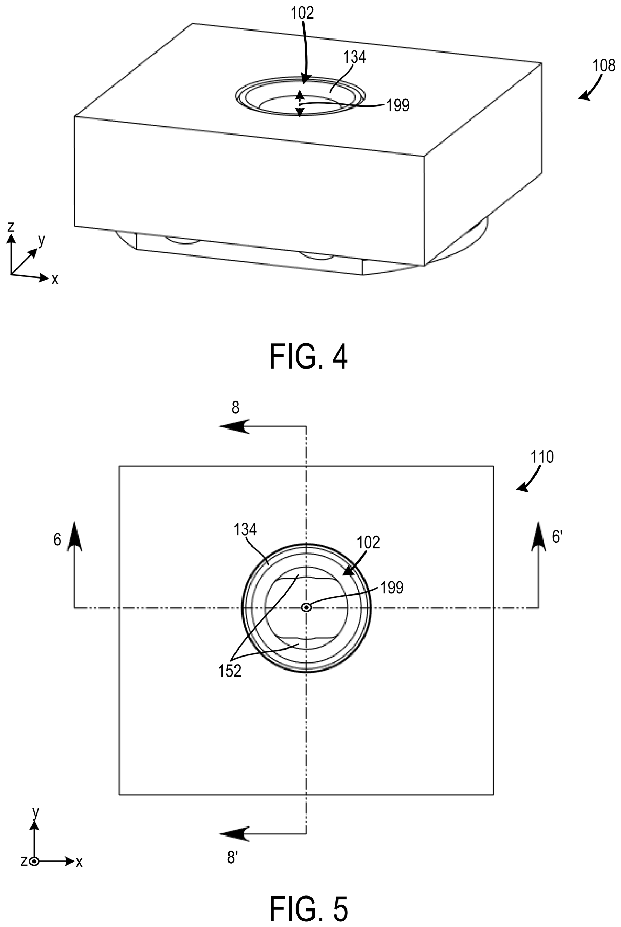

FIGS. 4-8B show the first section 132 and the second section of the composite sleeve 102 are again depicted. Further, the protrusions 152 and the flange 150 in the first section 132 as well as the flange 148 in the second section 134 are also depicted in FIGS. 4-8B.

FIG. 4 shows a perspective view of the composite sleeve 102 that is mated with the workpiece 110. The second section 134 of the sleeve is specifically depicted in FIG. 4.

FIG. 5 shows a top view of the composite sleeve 102 that is mated with the workpiece 110. The protrusions 152 in the composite sleeve 102 are depicted in FIG. 5.

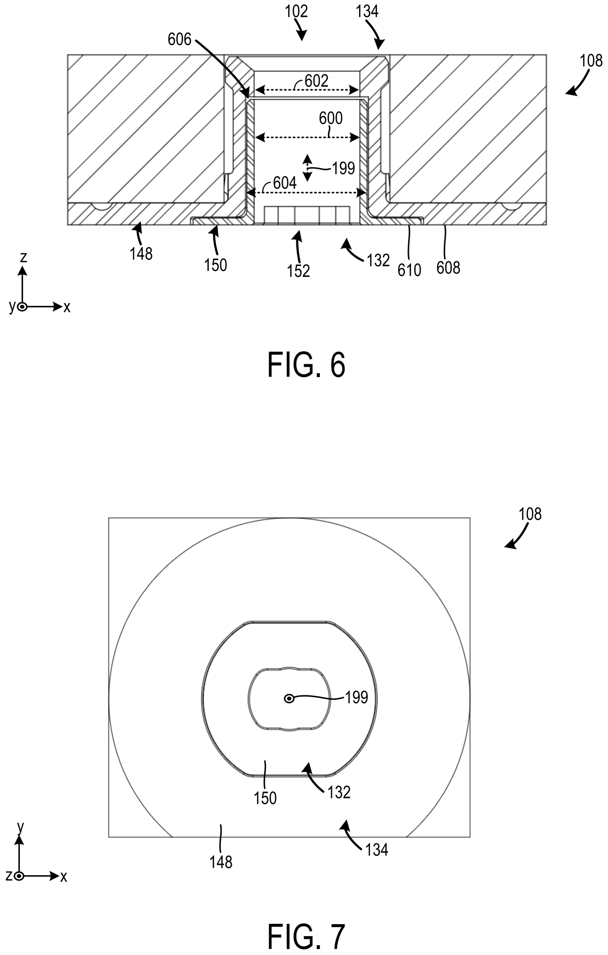

FIG. 6 shows an inner diameter 600 of the first section 132 which is equal to an inner diameter 602 of the second section 134. In this way, a collet body may be smoothly inserted into the composite sleeve. Further, in the illustrated example, an outer diameter 604 of the first section 132 is constant from a chamfered lip 606 to the flange 150. However, alternate contours of the first section of the sleeve have been contemplated. FIG. 6 also shows lower surfaces 608 and 610 of the flanges 148 and 150 are aligned along a lateral axis. In this way, both the flanges may be in face sharing contact with a lower workpiece. However, the flanges may have alternate geometries.

FIG. 7 shows a bottom view of the composite sleeve 102 that is mated with the workpiece 110. The flanges 148 and 150 of the sleeve sections 134 and 132 are depicted in FIG. 7.

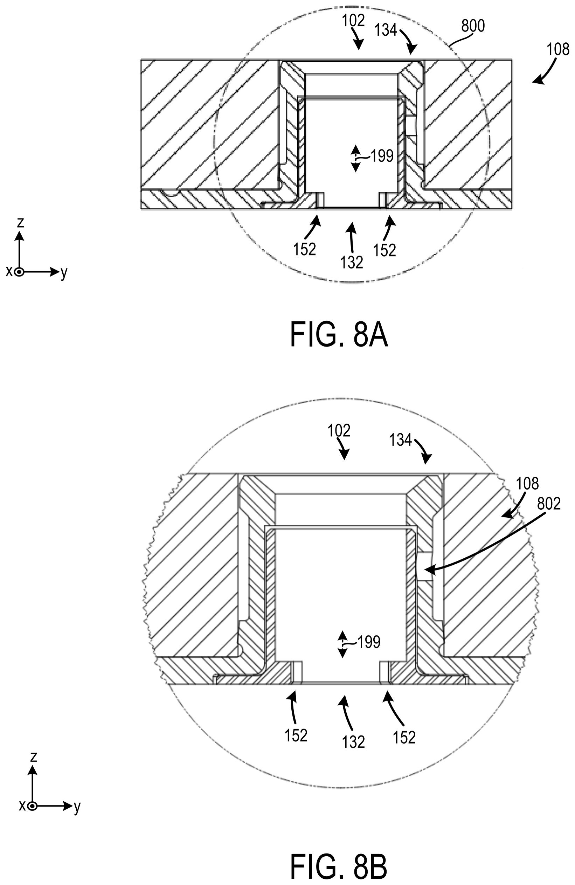

FIG. 8A denotes the boundary 800 of the detailed view that is depicted in FIG. 8B. FIGS. 8A-8B show the protrusions 152 that extend between collet body legs during use of the fastener assembly. Thus, as previously discussed the sleeve protrusions provide anti-rotation functionality in relation to the collet body. Additionally, the second section 134 of the composite sleeve 102 may include an opening 802.

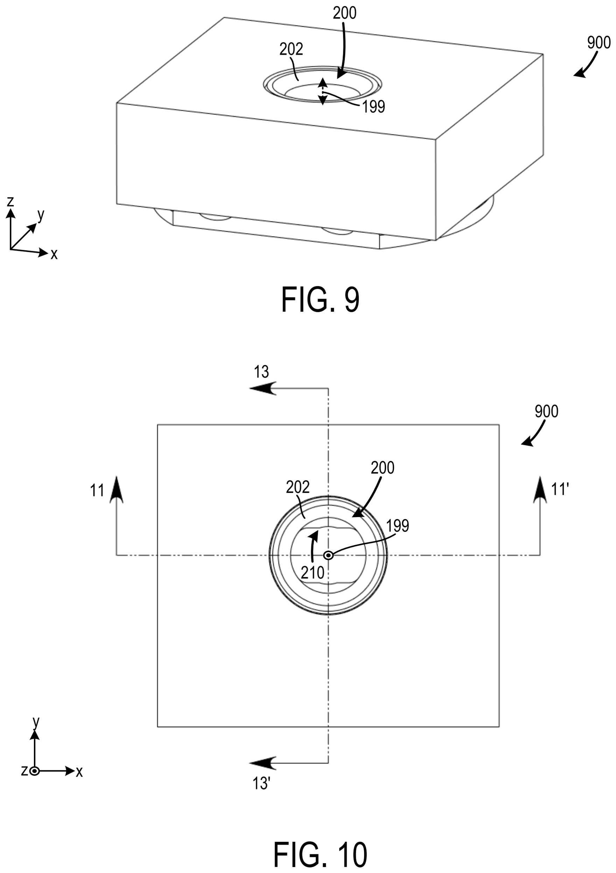

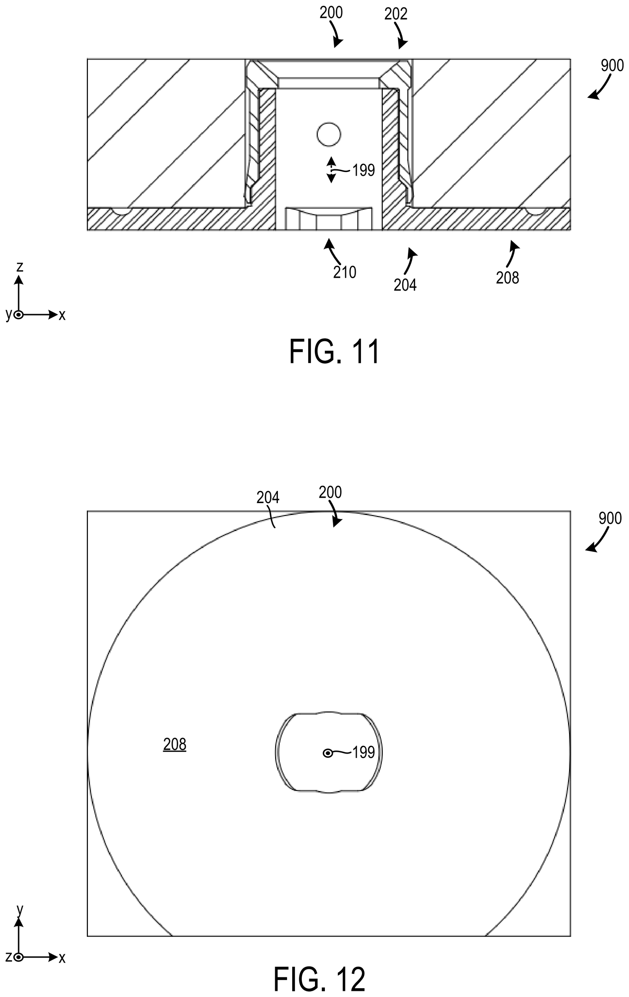

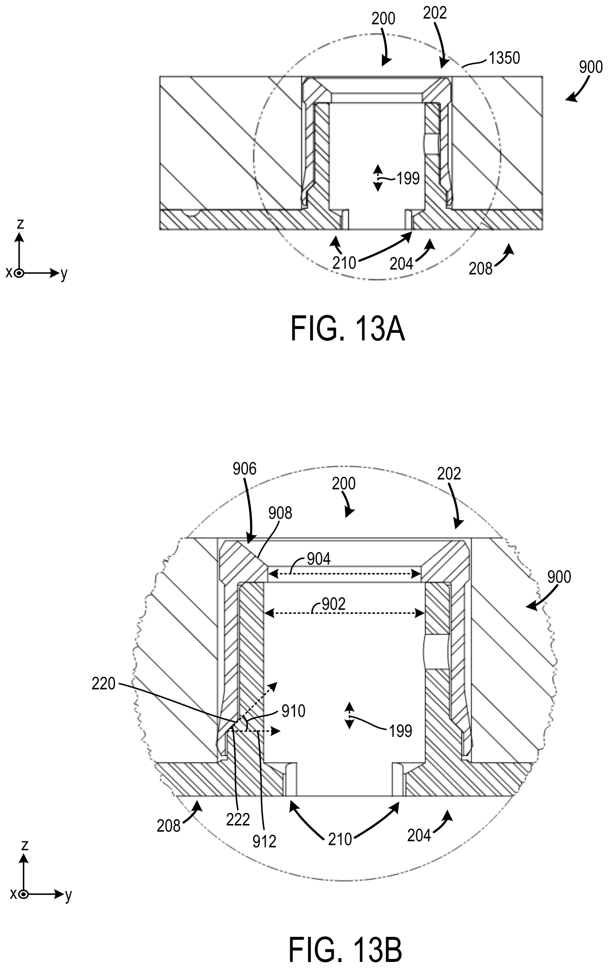

FIGS. 9-13B show detailed views the composite sleeve 200 that is mated with a workpiece 900. FIG. 9 specifically shows a perspective view of the composite sleeve 200 and the workpiece 900, FIG. 10 shows a top view of the composite sleeve and the workpiece, FIG. 11 shows a cross-sectional view of the composite sleeve and the workpiece, FIG. 12 shows a bottom view of the composite sleeve and the workpiece, and FIGS. 13A and 13B show other cross-sectional views of the composite sleeve and the workpiece. FIG. 10 shows the cutting plane 11-11' for the cross-sectional view depicted in FIG. 11 and the cutting plane 13-13' for the cross-sectional views depicted in FIGS. 13A-13B.

FIGS. 9-13B show the first section 202 and the second section of the composite sleeve 200 are again depicted. Further, the protrusions 210 in the first section 202 as well as the flange 208 in the second section 204 are also depicted in FIGS. 9-13B.

FIG. 13A denotes the boundary 1350 of the detailed view that is depicted in FIG. 13B.

Additionally, FIG. 13B shows an inner diameter 902 of the second section 204. Additionally, an inner diameter 904 of a top portion 906 of the first section 202 is also illustrated in FIG. 13B. The inner diameter 904 is less than the inner diameter 902, in the illustrated example. Further in the illustrated example, the top portion 906 include a chamfered surface 908. However, alternate sleeve contours are possible.

The sloped surface 220 and 222 are additionally depicted in FIG. 13B. An angle 910 of the sloped surfaces 220 and 222 in relation to a horizontal axis 912 is also indicated in FIG. 13B. The angle 910 may be in the range of 30°-60°, in one example.

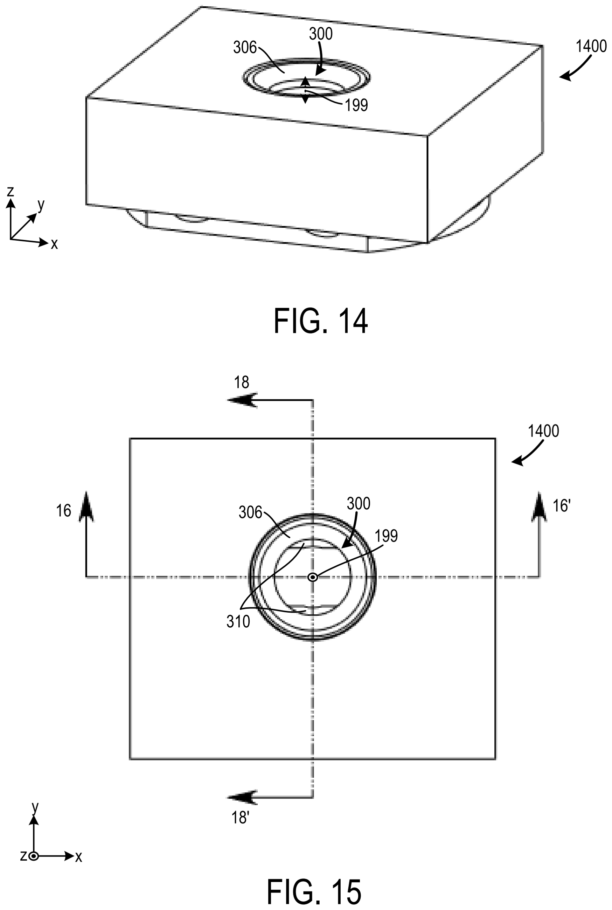

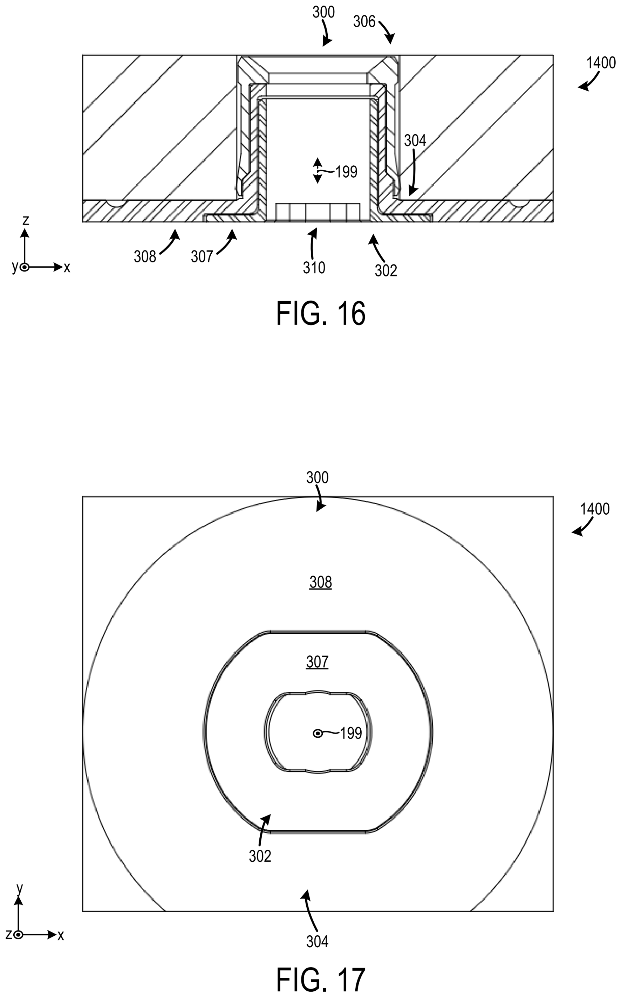

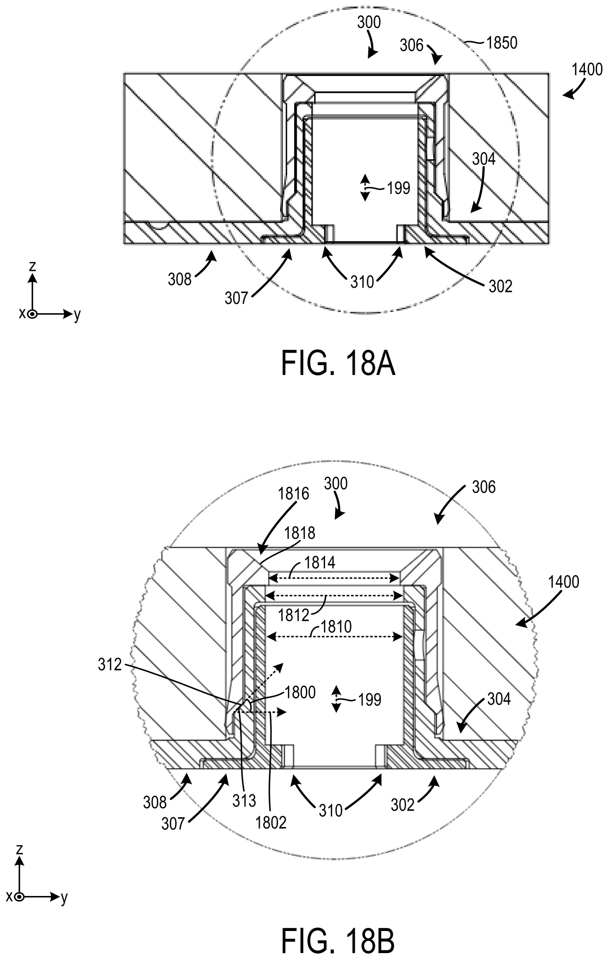

FIGS. 14-18B show the composite sleeve 300 mated with a workpiece 1400. FIG. 14 specifically shows a perspective view of the composite sleeve 300 and the workpiece 1400, FIG. 15 shows a top view of the composite sleeve and the workpiece, FIG. 16 shows a cross-sectional view of the composite sleeve and the workpiece, FIG. 17 shows a bottom view of the composite sleeve and the workpiece, and FIGS. 18A and 18B show other cross-sectional views of the composite sleeve and the workpiece. FIG. 15 shows the cutting plane 16-16' for the cross-sectional view depicted in FIG. 16 and the cutting plane 18-18' for the cross-sectional views depicted in FIGS. 18A-18B.

The first section 302, the second section 304, and the third section 306 and the second section of the composite sleeve 300 are again depicted in FIGS. 14-18B. Further, the protrusions 310 in the first section 302 as well as the flange 308 in the second section 304 and the flange 307 in the first section 302 are also depicted in FIGS. 14-18B.

FIG. 18A denotes the boundary 1850 of the detailed view that is depicted in FIG. 18B.

Additionally, FIG. 18B shows an inner diameter 1810 of the first section 302 and an inner diameter 1812 of the second section 304. Additionally, an inner diameter 1814 of a top portion 1816 of the third section 306 is also illustrated in FIG. 18B. The inner diameter 1810 is equal to the inner diameter 1812 and the inner diameter 1814 is less than the inner diameter 1812, in the illustrated example. Further in the illustrated example, the top portion 1816 include a chamfered surface 1818. However, alternate sleeve contours are possible.

The sloped surface 312 and 313 are additionally depicted in FIG. 18B. An angle 1800 of the sloped surfaces 312 and 313 in relation to a horizontal axis 1802 is also indicated in FIG. 13B. The angle 1800 may be in the range of 30°-60°, in one example.

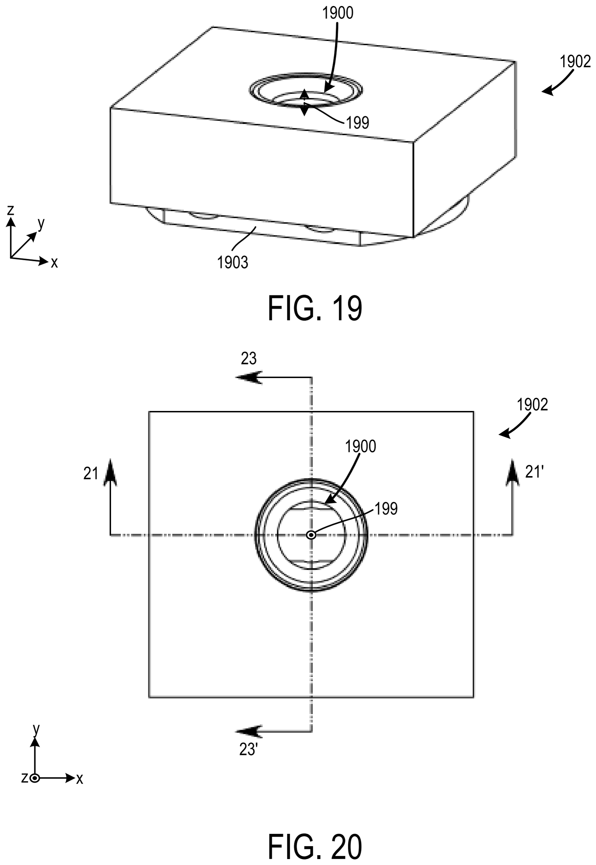

FIGS. 19-23B show another example of a composite sleeve 1900 that is mated with workpiece 1902. The composite sleeve 1900 again includes a first section 1904 and a second section 1906. The first section 1904 and the second section 1906 include overlapping features with the first and second sections 132 and 134 shown in FIGS. 1 and 4-8B. As such redundant description of the overlapping features is omitted for brevity.

FIG. 19 shows a perspective view of the composite sleeve 1900 that is mated with the workpiece 1902. A flange 1903 of a section 1906 of the sleeve is depicted in FIG. 19.

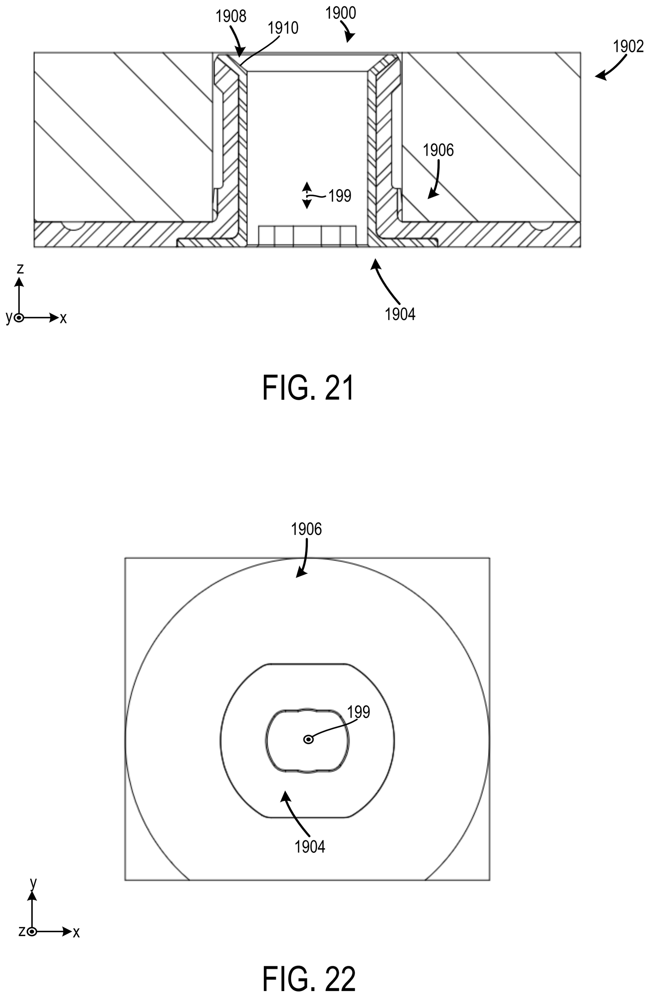

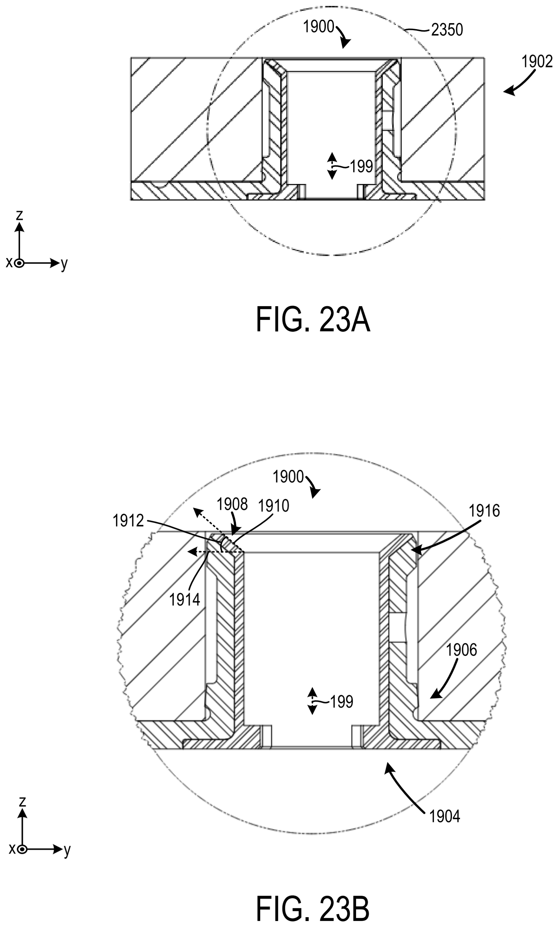

FIG. 20 illustrates a top view of the composite sleeve 1900 that is mated with the workpiece 1902. FIG. 20 shows the cutting plane 21-21' for the cross-sectional view depicted in FIG. 21 and the cutting plane 23-23' for the cross-sectional views depicted in FIGS. 23A-23B. FIG. 23A shows a boundary 2350 detailed view depicted in FIG. 23B.

FIG. 21 depicts a cross-sectional view of the composite sleeve 1900 positioned in the workpiece 1902. To elaborate, the first section 1904 in the composite sleeve 1900 depicted in FIGS. 21 and 23B includes an upper portion 1908 with a sloped surface 1910. An angle 1912 of the sloped surface 1910 with regard to a horizontal axis 1914 is depicted in FIG. 23B. Further, the upper portion 1908 is in face sharing contact with an upper portion 1916 of the second section 1906. FIG. 22 shows a bottom view of the composite sleeve 1900 with the first section 1904 and the second section 1906.

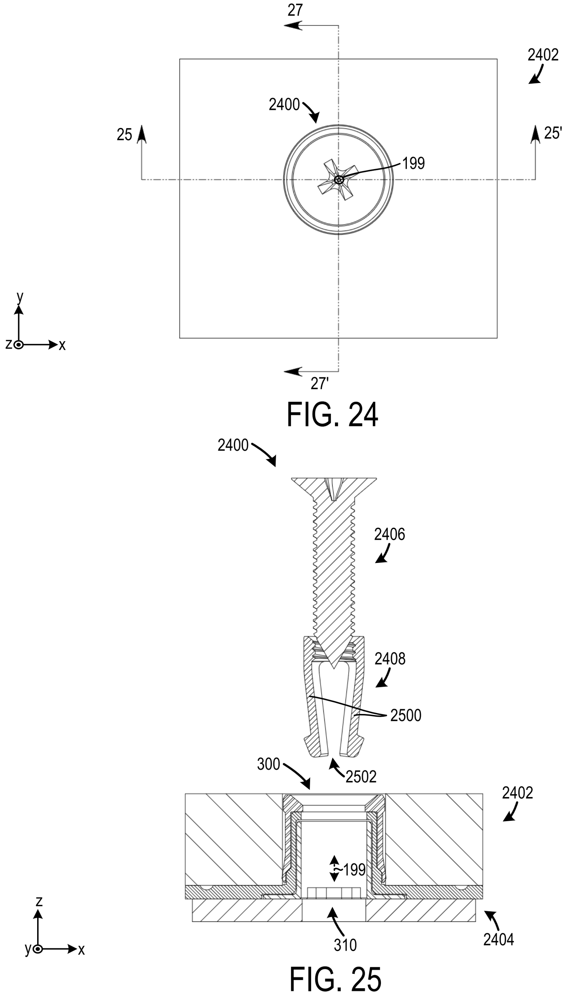

FIGS. 24-34 show another example of a fastener assembly 2400 and workpieces 2402 and 2404. The fastener assembly 2400 includes a stud 2406, a collet body 2408, and the composite sleeve 300. The features of the composite sleeve 300 are described above with regard to FIGS. 3 and 14-18B.

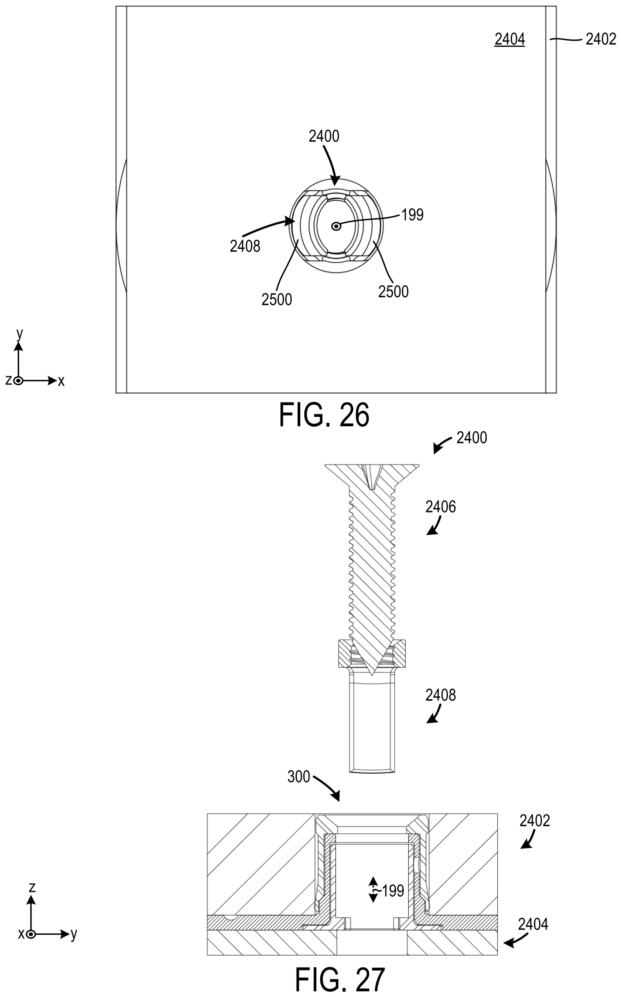

FIG. 24 shows a top view of the fastener assembly 2400 in an unclamped state in relation to the workpieces 2402 and 2404. FIG. 24 shows the cutting plane 25-25' for the cross-sectional view depicted in FIG. 25 and the cutting plane 27-27' for the cross-sectional views depicted in FIG. 27.

FIG. 25 shows the stud 2406 and the collet body 2408 prior to insertion into the composite sleeve 300 that is mated with the workpieces 2402 and 2404. Legs 2500 in the collet body 2408 are in an unclamped position. When the collet body 2408 is inserted into the composite sleeve 300 the protrusion 310 mates with gaps 2502 between the legs 2500 to inhibit rotation of the collet body with regard to the sleeve. FIG. 26 shows a bottom view of the fastener assembly 2400 clamping the workpieces 2404 and 2404. The legs 2500 of the collet body 2408 are shown in a clamping position.

FIG. 27 shows another cross-sectional view of the stud 2406 and the collet body 2408 prior to insertion into the composite sleeve 300 that is mated with the workpieces 2402 and 2404.

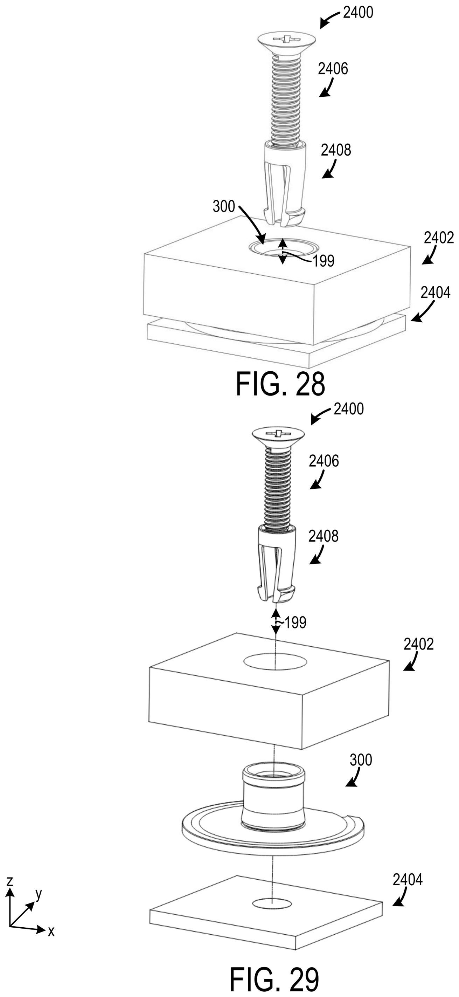

FIG. 28 shows a perspective view of the fastener assembly 2400 with the stud 2406 and the collet body 2408 prior to insertion into the composite sleeve 300 that is mated with the workpieces 2402 and 2404.

FIG. 29 shows an exploded view of the fastener assembly 2400 with the stud 2406, the collet body 2408, and the composite sleeve 300. The workpieces 2402 and 2404 are also depicted in FIG. 29.

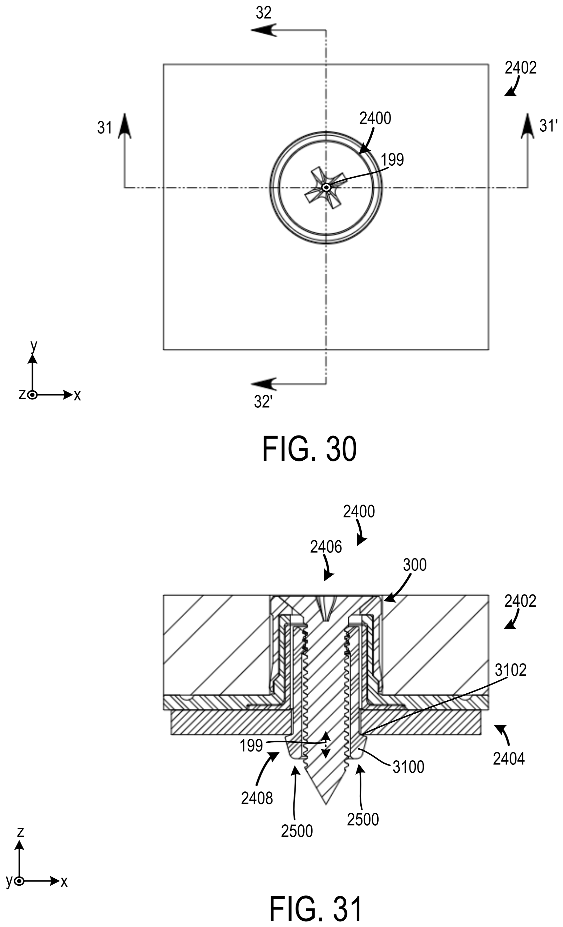

FIG. 30 shows a top view of the fastener assembly 2400 in clamped state in relation to the workpieces 2402 and 2404. FIG. 30 shows the cutting plane 30-30' for the cross-sectional view depicted in FIG. 30 and the cutting plane 31-31' for the cross-sectional views depicted in FIG. 31.

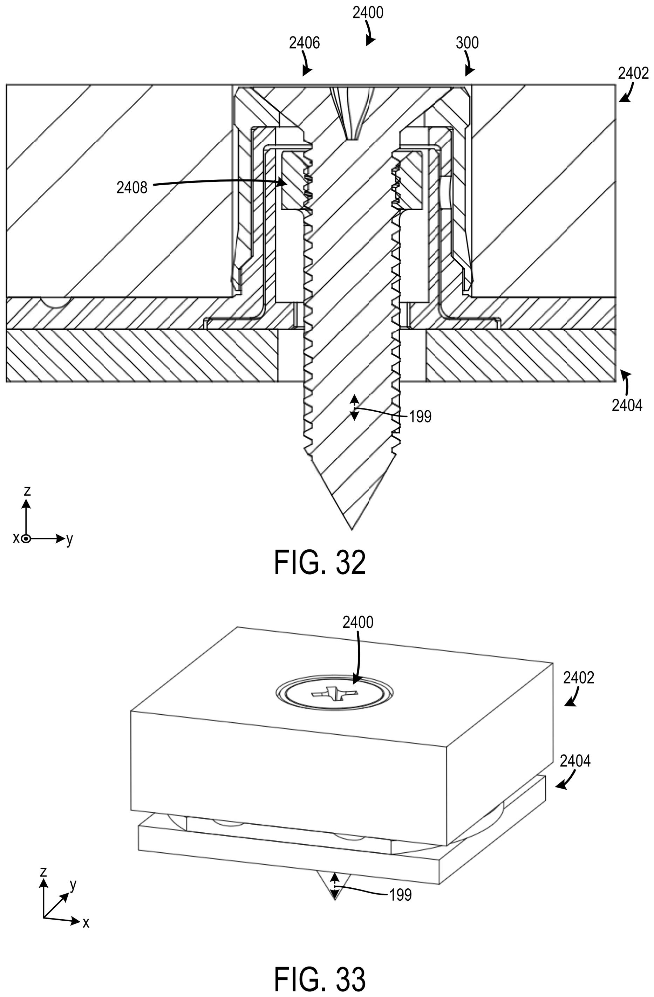

FIGS. 31 and 32 show the fastener assembly 2400 in clamped state in relation to the workpieces 2402 and 2404. The stud 2406, the collet body 2408, and the composite sleeve 300 are again depicted in FIGS. 31 and 32. Further, FIG. 31 shows the legs 2500 of the collet body 2408. Specifically, feet 3100 with clamping surfaces 3102 that contact the workpiece 2404 are depicted in FIG. 31. FIG. 33 shows a perspective view of the fastener assembly 2400 clamping the workpieces 2402 and 2404.

FIGS. 1-34 provide for a method for assembly of a composite sleeve. The method includes, in one example, mating a first section of the composite sleeve with a second section of the composite sleeve. In the composite sleeve, portions of the first section and the second section form an inner bore and one of the first section and the second section includes a protrusion that is positioned at a lower side and configured to prevent rotation of a collet body. The method may further include coupling the first section to the second section. To expound, coupling the first section to the second section may include adhesively bonding the first section to the second section, in one example. In another example, coupling the first section to the second section includes interference fitting the first section with the second section. The method described above allows the composite sleeve to be efficiently manufactured.

FIGS. 1-34 are drawn approximately to scale, aside from the schematically depicted components. However, other relative component dimensions may be used, in other embodiments.

FIGS. 1-34 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space therebetween and no other components may be referred to as such, in at least one example. As yet another example, elements shown above/below one another, at opposite sides to one another, offset from one another, aligned with one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. An elements inner and outer diameter may be referred to as such. Further an element with a smaller or greater diameter than another element may be referred to as such.

The invention will further be described in the following paragraphs. In one aspect, a composite sleeve is provided that comprises a first section that is mated with a second section; wherein portions of the first section and the second section form an inner bore with a constant diameter; and wherein one of the first section and the second section including a protrusion positioned at a lower side and configured to prevent rotation of a collet body. In one example, the first section may be arranged interior to the second section. In another example, the first section and the second section each include a flange. Further, in one example, the first section may be arranged exterior to the second section. In another example, the second section may include a flange. In another example, the composite sleeve may further comprise a third section at least partially circumferentially enclosing the second section. In another example, the third section may include an upper opening with a chamfered surface. In another example, the first section and the second section may be injection molded. In another example, the first and second sections may be constructed out of a metal. In yet another example, the first and second sections may be constructed out of aluminum. In another example, the composite sleeve may further include an adhesive interface formed between the first section and the second section. In yet another example, the adhesive interface is included in a potted interface that includes a potted compound. In another example, the composite sleeve may further include an interference fit interface formed between the first section and the second section.

In another aspect, a method for assembly of a composite sleeve is provided that comprises mating a first section of the composite sleeve with a second section of the composite sleeve; wherein portions of the first section and the second section form an inner bore; and wherein one of the first section and the second section includes a protrusion that is positioned at a lower side and configured to prevent rotation of a collet body. In one example, the method may further comprise coupling the first section to the second section. In yet another example, coupling the first section to the second section may include adhesively bonding the first section to the second section. In another example, coupling the first section to the second section may include interference fitting the first section with the second section.

In another aspect, a fastener assembly is provided that comprises a composite sleeve comprising: a first section that is mated with a second section; wherein portions of the first section and the second section form an inner bore; and wherein one of the first section and the second section includes a protrusion that is positioned at a lower side; a collet body configured to mate with the composite sleeve, wherein the protrusion prevents rotation of the collet body in relation to the composite sleeve; and a stud configured to threadingly engage the collet body. In one example, one or more of the first section and the second section may include a flange. In another example, the composite sleeve may include one or more of: an adhesive interface; and an interference fit interface.

Note that the example control and estimation routines included herein can be used with various fastener configurations. The methods and routines disclosed herein may be stored as executable instructions in non-transitory memory and may be carried out by manufacturing machinery, a tooling apparatus, combinations thereof, and the like. However, it will be appreciated that at least a portion of the method steps may be manually implemented via personnel.

It will be appreciated that the configurations and routines disclosed herein are exemplary in nature, and that these specific embodiments are not to be considered in a limiting sense, because numerous variations are possible. For example, the above technology can be applied to a broad range of manufacturing fields such as the aerospace industry, the construction industry, the maritime industry, etc. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A composite sleeve, comprising:
a first section that is mated with a second section;
wherein portions of the first section and the second section form an inner bore; and
wherein one of the first section and the second section includes a protrusion that is positioned at a lower side and configured to prevent rotation of a collet body.

2. The composite sleeve of claim 1, wherein the first section is arranged interior to the second section.

3. The composite sleeve of claim 2, wherein the first section and the second section each include a flange.

4. The composite sleeve of claim 1, wherein the first section is arranged exterior to the second section.

5. The composite sleeve of claim 4, wherein the second section includes a flange.

6. The composite sleeve of claim 1, further comprising a third section at least partially circumferentially enclosing the second section.

7. The composite sleeve of claim 6, wherein the third section includes an upper opening with a chamfered surface.

8. The composite sleeve of claim 1, wherein the first section and the second section are injection molded.

9. The composite sleeve of claim 8, wherein the first section and the second section are constructed out of a metal.

10. The composite sleeve of claim 9, wherein the first section and the second section are constructed out of aluminum.

11. The composite sleeve of claim 1, further comprising an adhesive interface formed between the first section and the second section.

12. The composite sleeve of claim 11, wherein the adhesive interface is included in a potted interface that includes a potted compound.

13. The composite sleeve of claim 1, further comprising an interference fit interface formed between the first section and the second section.

14. A method for assembly of a composite sleeve, comprising:
mating a first section of the composite sleeve with a second section of the composite sleeve;
wherein portions of the first section and the second section form an inner bore; and
wherein one of the first section and the second section includes a protrusion that is positioned at a lower side and configured to prevent rotation of a collet body.

15. The method of claim 14, further comprising:
coupling the first section to the second section;
wherein coupling the first section to the second section includes adhesively bonding the first section to the second section; and/or
wherein coupling the first section to the second section includes interference fitting the first section with the second section.
